Europäisches Patentamt

European Patent Office

Office européen des brevets

(19)

(11) Veröffentlichungsnummer: **0 086 887**
**B1**

(12) **EUROPÄISCHE PATENTSCHRIFT**

(45) Veröffentlichungstag der Patentschrift:
14.08.85

(21) Anmeldenummer: 82111468.3

(22) Anmeldetag: 10.12.82

(51) Int. Cl.⁴: **F 16 D 55/10**, F 16 D 65/54,
F 16 D 65/24

(54) Betätigungseinrichtung für hydraulische Scheibenbremsen.

(30) Priorität: 06.02.82 DE 3204188

(43) Veröffentlichungstag der Anmeldung:
31.08.83 Patentblatt 83/35

(45) Bekanntmachung des Hinweises auf die Patenterteilung:
14.08.85 Patentblatt 85/33

(84) Benannte Vertragsstaaten:
AT CH DE FR GB IT LI

(56) Entgegenhaltungen:
DE - A - 2 518 388
DE - A - 2 759 209
DE - A - 2 948 705

(73) Patentinhaber: WABCO Westinghouse
Fahrzeugbremsen GmbH, Am Lindener
Hafen 21 Postfach 91 12 80, D-3000 Hannover 91 (DE)

(72) Erfinder: Feldmann, Joachim, Auf dem Papenberg 8,
D-3057 Neustadt 2 (DE)
Erfinder: Friederichs, Otto, Ziegeleistrasse 238,
D-3008 Garbsen 1 (DE)

(74) Vertreter: Schrödter, Manfred, WABCO Westinghouse
Fahrzeugbremsen GmbH Am Lindener
Hafen 21 Postfach 91 12 80, D-3000 Hannover 91 (DE)

## Beschreibung

Die Erfindung betrifft eine Betätigungseinrichtung für eine Scheibenbremse, insbesondere für Kraftfahrzeuge, gemäss dem Oberbegriff des Patentanspruchs 1.

Eine Betätigungseinrichtung für eine Scheibenbremse ist bekannt durch das „ATE-Bremsenhandbuch", 6. Auflage 1979, Seite 121, insbesondere Fig. 12 und 13.

Die Rückstellung der Spreizelemente nach einem Bremshub erfolgt bei dieser bekannten Betätigungseinrichtung durch besonders gestaltete Dichtringe, d. h. diese Dichtringe erfüllen als elastische Ringelemente zwei Funktionen, nämlich die eigentliche Abdichtfunktion der Druckräume und die Rückstellfunktion bei einer Bremsbetätigung.

Bei Vollbelag-Scheibenbremsen können diese beiden Funktionen aufgrund der grossen Dichtdurchmesser die elastischen Ringelemente überfordern, so dass Probleme, wie z. B. zu geringe Rückstellung der Spreizelemente und daraus entstehende Restmomente, in der Bremse auftreten können, da der Rückstellweg von der Elastizität der Ringelemente abhängig ist. Dies kann insbesondere nach einer durch Bremsbelagverschleiss erfolgten automatischen Nachstellung des Lüftspiels der Betätigungseinrichtung dazu führen, dass die zu geringe Rückstellung ein zu kleines Lüftspiel (u. U. kein ausreichendes Lösen der Bremse) zur Folge hat.

Eine Betätigungseinrichtung der eingangs genannten Art ist aus der DE-A Nr. 2948705, dort insbesondere Fig. 1, bekannt. Diese bekannte Betätigungseinrichtung zeigt einen Zylinder, in dem gegenläufig axial verschiebbar ein aus einem Nebenkolben und einem Hauptkolben bestehender Kolben angeordnet ist. Der Zylinder weist einen radial nach innen gerichteten Anschlag auf, an dem sich eine Feder abstützt, die den Hauptkolben in Rückstellrichtung beaufschlagt. Bei Druckbeaufschlagung einer zwischen Zylinder und Kolben eingeschlossenen Druckkammer wird zunächst der Hauptkolben von der Feder festgehalten, so dass sich zunächst nur der Nebenkolben relativ zum Zylinder in Zuspannrichtung bewegt. Erst wenn der Druck die Kraft der Feder überwindet, wird auch der Hauptkolben relativ zum Zylinder in Zuspannrichtung verschoben. Dabei werden Hauptkolben und Nebenkolben über eine Verriegelungseinrichtung kraftschlüssig verbunden, so dass die Summe der druckbeaufschlagten Flächen von Nebenkolben und Hauptkolben zur Erzeugung der Zuspannkraft zur Verfügung steht. Bei Druckentlastung der Druckkammer wird der Hauptkolben durch die Feder in seine Ausgangsstellung zurückgedrückt. Dabei nimmt er über eine weitere Feder den Nebenkolben mit. Da bei dieser Rückstellbewegung die Verriegelung nicht aufgehoben wird, bleibt der in der Anfangsphase der Druckbeaufschlagung von dem Nebenkolben allein zurückgelegte Weg relativ zum Hauptkolben erhalten.

Der vorstehend beschriebene Stand der Technik ist nicht geeignet, ein definiertes reproduzierbares Lüftspiel der Spreizelemente zu gewährleisten.

Der Erfindung liegt deshalb die Aufgabe zugrunde, eine Betätigungseinrichtung der eingangs genannten Art mit einfachen Mitteln derart zu verbessern, dass sie ein gleichbleibendes Lüftspiel der Spreizelemente sicherstellt.

Diese Aufgabe wird durch die im Patentanspruch 1 angegebene Erfindung gelöst.

Durch das in dem Spreizbewegungsbereich der Betätigungseinrichtung angeordnete Verbindungselement wird die Möglichkeit geschaffen, zumindest eines der beiden elastischen Ringelemente von der Übernahme der Rückstellfunktion zu entlasten, während die Rückstellfunktion von dem Verbindungselement erfüllt oder zumindest durch dieses unterstützt wird.

Das Verbindungselement kann wahlweise sowohl am Innendurchmesser als auch am Aussendurchmesser oder, falls eine sehr hohe Rückstellkraft erforderlich ist, am Innen- und Aussendurchmesser der Betätigungseinrichtung eingebaut werden.

Eine Anwendung der Erfindung bei Teilbelag-Scheibenbremsen ist gleichfalls vorteilhaft, falls eine derartige Massnahme, beispielsweise infolge extremer Einsatzbedingungen des Fahrzeuges, erforderlich ist.

Die erfindungsgemässe Betätigungseinrichtung erfüllt in vorteilhafter Weise gleichzeitig die Aufgabe einer Lüftspielnachstellung, welche sich bei einem Bremsbelagverschleiss automatisch vollzieht, wobei auch nach einer derartigen Nachstellung die volle Rückstellung der Spreizelemente gewährleistet ist.

Vorteilhafte Weiterbildungen und Ausgestaltungen der Erfindung sind in den Unteransprüchen angegeben.

Die Erfindung wird nachfolgend anhand von Ausführungsbeispielen, die in der Zeichnung dargestellt sind, näher erläutert. Es zeigen:

Fig. 1 eine hydraulisch betätigte Vollbelag-Scheibenbremse, deren Betätigungseinrichtung aus einem Zylinder und einem Kolben besteht, mit Verbindungselement und Rückstellfeder am Aussendurchmesser der Einrichtung, mit automatischer Lüftspielnachstellung,

Fig. 2 eine Betätigungseinrichtung gemäss Fig. 1, deren Rückstellfeder mit einem elastischen Ringelement kombiniert ist,

Fig. 3 das mit einer Feder kombinierte elastische Ringelement gemäss Fig. 2, und

Fig. 4 ein aus reinen Elastomeren bestehendes Ringelement als ein möglicher Ersatz für das Ringelement gemäss Fig. 3.

Ein aus zwei Bremsscheiben 1, 2 bestehendes Gehäuse einer hydraulisch betätigten Vollbelag-Scheibenbremse ist mittels Schrauben an der Nabe einer nicht dargestellten Fahrzeugachse befestigt. Die feststehenden Teile der Bremse bestehen aus Bremsringen 3, 4 mit daran befestigten, beim Bremsen mit den umlaufenden Bremsscheiben 1, 2 in Reibschluss stehenden Bremsbelägen 5, 6, welche in Umlaufrichtung fest, axial frei beweglich an einem Bremsträger 7 aufgehängt sind, der am Achsflansch 8 befestigt ist.

Die Betätigungseinrichtung der hydraulischen Bremse besteht aus zwei Spreizelementen 9, 10, welche als U-förmige Ringzylinder 9 und als Ringkolben 10 ausgebildet sind. Der im U-Profil des Ringzylinders 9 geführte Ringkolben 10 bildet einen Hydraulikraum 11, dessen Abdichtung am Innen- und Aussendurchmesser mittels elastischer Ringelemente 12, 13, 14 erfolgt.

Der an der Aussenseite gelegene Schenkel des U-förmigen Ringzylinders 9 ist derartig gekürzt und ausgebildet, dass in diesem am Aussendurchmesser der Betätigungseinrichtung gewonnenen Ringraum ein loses Verbindungselement 15 eine indirekte Wirkverbindung zwischen dem Ringkolben 10 und dem Ringzylinder 9 herstellt, wobei das erste elastische Ringelement 12 zwischen dem Ringkolben 10 und dem Verbindungselement 15 und das zweite elastische Ringelement 14 zwischen dem Verbindungselement 15 und dem Ringzylinder 9 abdichtet, während das dritte elastische Ringelement 13 eine direkte Abdichtung zwischen dem inneren Schenkel des U-förmigen Ringzylinders 9 und dem Ringkolben 10 bildet. In dem hier dargestellten Ausführungsbeispiel erfüllt das dritte elastische Ringelement 13 am Innendurchmesser der Betätigungseinrichtung gleichzeitig Rückstellfunktionen. Diese zusätzliche Funktion ist jedoch vernachlässigbar. Das Verbindungselement 15 hat ein in Spreizrichtung der Spreizelmente 9, 10 ausgelegtes Bewegungsspiel a, welches dem Lüftspiel der Betätigungseinrichtung bei einer Bremsung entspricht. Ein Anschlag 16 des Ringzylinders 9 begrenzt die mit dem Ringkolben 10 gemeinsame Bewegung des Verbindungselementes 15 in Spreizrichtung. Der Anschlag 16 dient gleichzeitig als Abstützung einer als Schraubenfeder ausgebildeten Feder 17, welche das Verbindungselement 15 in Rückstellrichtung spannt.

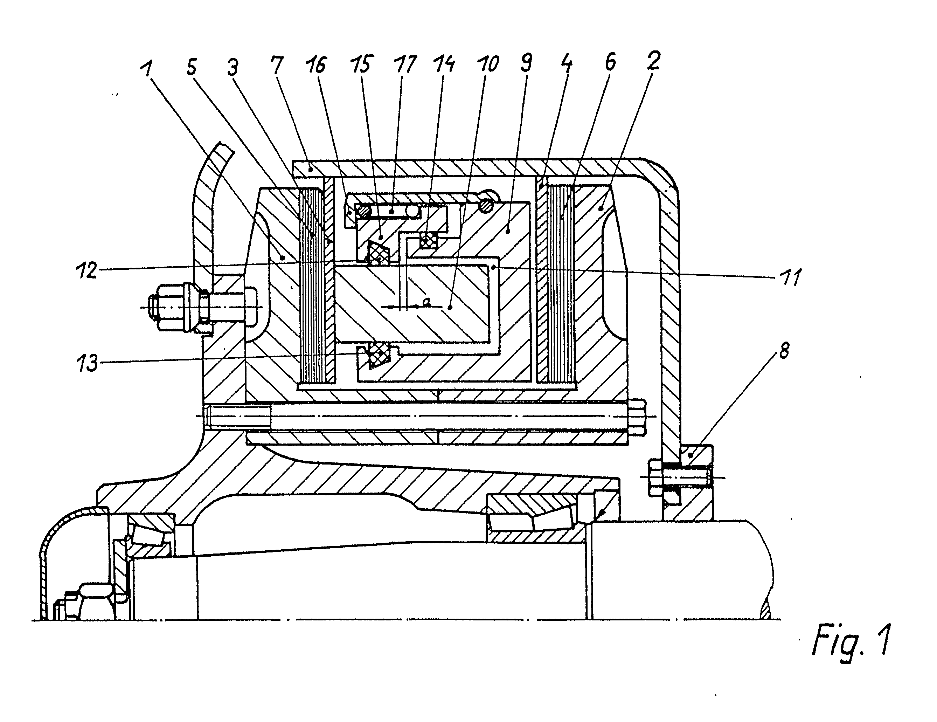

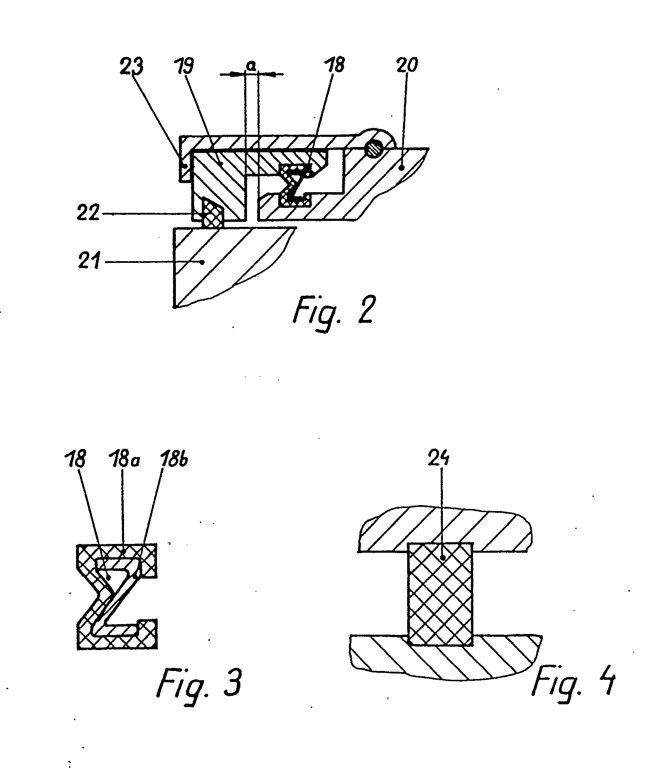

Gemäss Fig. 2 wird die Feder durch einen elastischen Federblock 18 gebildet, welcher anstelle des in Fig. 1 dargestellten zweiten elastischen Ringelementes 14 zum Einbau gelangt. Der Federblock 18 besteht aus einem Elastomer 18a zur Abdichtung des Hydraulikraumes und einer darin eingebetteten Stahlfeder 18b gemäss Fig. 3. Während in Fig. 1 das zweite elastische Ringelement 14 die Axialbewegung des Verbindungselementes 15 über die abdichtende Reibverbindung zwischen dem Ringzylinder 9 und dem Verbindungselement 15 zulässt, ermöglicht gemäss Fig. 2 die Elastizität des in Hinterschneidungen des Ringzylinders 20 und des Verbindungselementes 21 verankerten elastischen Federblocks 18 die Axialbewegung des Verbindungselementes 19, wobei das bei der Spreizbewegung verformte Stahlfederelement 18b die Rückstellung bewirkt.

Das in Fig. 3 dargestellte, als Federblock ausgebildete zweite elastische Ringelement 18 kann in Abwandlung auch durch ein aus einem reinen Elastomer-Federblock gemäss Fig. 4 gebildeten zweiten elastischen Ringelement 24 bestehen.

In der nachfolgenden Funktionsbeschreibung wird die eingangs erwähnte Lüftspielnachstellung bei Bremsbelagverschleiss näher erläutert.

Bei Druckbeaufschlagung des Hydraulikraumes 11 bewegt sich der Ringkolben 10 aus dem Ringzylinder 9 und nimmt dabei über die Reibschlussverbindung des ersten elastischen Ringelementes 12 das Verbindungselement 15 gegen die Kraft der Feder 17 mit. Das in einer Hinterschneidung des Ringzylinders 9 geführte dritte elastische Ringelement 13 wird dabei durch Reibschluss mit dem Ringkolben 10 elastisch verformt. Die gemeinsame Bewegung des Ringkolbens 10 und des Verbindungselementes 15 ist über den mit a bezeichneten Spreizhub, der dem normalen Lüftspiel bei einer Bremsung entspricht, bis zu dem für das Verbindungselement 15 vorgesehenen Anschlag 16 möglich. Überschreitet infolge Bremsbelagverschleisses der Spreizhub des Ringkolbens 10 dieses normale Lüftspiel , so rutscht der Ringkolben 10 an den elastischen Ringelementen 12 und 13 um das Verschleissmass durch.

Werden die Bremsen gelöst, was einen Druckabbau im Hydraulikraum 11 zur Folge hat, erzeugt die Rückverformung des dritten elastischen Ringelementes 13 eine Rückstellkraft, welche auf den Ringkolben 10 einwirkt. Gemäss der Erfindung wird diese Rückstellkraft durch die Spannkraft der Feder 17 über das Verbindungselement 15 und die Reibschlussverbindung des ersten elastischen Dichtelementes 12 mit dem Ringkolben 10 unterstützt. Eine volle Rückstellung des Lüftspiels ist somit gewährleistet.

Gemäss Fig. 2 wird die Unterstützung der Rückstellkraft durch den in Fig. 3 dargestellten Federblock 18 durch eine Rückverformung der im Elastomer 18a eingebetteten Feder 18b erzielt, wobei die Funktion der aus einem Ringzylinder 20 und aus einem Ringkolben 21 bestehenden Betätigungseinrichtung im Zusammenwirken mit dem Verbindungselement 19, dem Anschlag 23 und dem ersten elastischen Ringelement 22 gemäss der anhand der Fig. 1 beschriebenen Funktion verläuft.

Eine weitere Vergrösserung der Rückstellkraft ist vorstellbar, wenn die erfindungsgemässe Rückstelleinrichtung sowohl am Aussendurchmesser als auch am Innendurchmesser der Betätigungseinrichtung eingebaut wird. Bei einer derartigen Anwendung würden beide elastischen Ringelemente 12 und 13 in vorteilhafter Weise lediglich Abdicht- und Reibfunktionen haben.

## Patentansprüche

1. Betätigungseinrichtung für eine Scheibenbremse, insbesondere für Kraftfahrzeuge, welche folgende Merkmale umfasst:

a) die Betätigungseinrichtung weist zwei beim Anpressen wenigstens eines Bremsbelages an eine Bremsscheibe gegeneinander bewegbare, hydraulisch beaufschlagbare Spreizelemente (10, 21; 9, 20) auf;

b) es ist eine Nachstelleinrichtung vorgesehen, welche eine Nachstellung eines durch Bremsbelagverschleiss entstandenen zusätzlichen Spreizhubes der Spreizelemente (10, 21; 9, 20) bewirkt;

c) die Nachstelleinrichtung enthält ein im Spreizbewegungsbereich der Spreizelemente (10, 21; 9, 20) angeordnetes, in Bewegungsrichtung der Spreizelemente (10, 21; 9, 20) bewegbares ringförmiges Verbindungselement (15, 19);

d) das Verbindungselement (15, 19) ist über ein erstes elastisches Ringelement (12, 22) gegen das eine Spreizelement (10, 21) abgedichtet;

e) das Verbindungselement (15, 19) ist über ein zweites elastisches Ringelement (14, 18, 24) gegen das andere Spreizelement (9, 20) abgedichtet;

f) das andere Spreizelement (9, 20) weist einen in die Bewegungsbahn des Verbindungselementes (15, 19) ragenden Anschlag (16, 23) auf;

g) zwischen das Verbindungselement (15, 19) und das andere Spreizelement (9, 20) ist eine Feder (17,18b, 24) geschaltet, die das Verbindungselement in Richtung von dem Anschlag (16, 23) weg derart vorspannt, dass die Kraft der Feder (17, 18b, 24) der Relativbewegung der Spreizelemente (10, 21; 9, 20) in Spreizrichtung entgegenwirkt und eine Rückstellbewegung der Spreizelemente (10, 21; 9, 10) nach einer Spreizbewegung bewirkt,

gekennzeichnet durch folgende Merkmale:

h) das erste elastische Ringelement (12, 22) ist so ausgebildet und so angeordnet, dass es das Verbindungselement (15, 19) und das eine Spreizelement (10, 21) mit einer der Kraft der Feder (17, 18b, 24) wenigstens gleichgrossen Kraft reibschlüssig verbindet;

i) der Anschlag (16, 23) an dem anderen Spreizelement (9, 20) ist derart angeordnet, dass das Verbindungselement (15, 19) während des zusätzlichen Spreizhubes mittels des Anschlages (16, 23) gegen die Reibkraft des ersten elastischen Ringelementes (12, 22) verschiebbar ist.

2. Betätigungseinrichtung nach Anspruch 1, wobei die Scheibenbremse als Vollbelag-Scheibenbremse mit einer ringförmigen Betätigungseinrichtung ausgebildet ist, gekennzeichnet durch folgende Merkmale:

a) die Nachstelleinrichtung und die Feder (17, 18b, 24) sind wenigstens am Aussen- oder Innenumfang der Betätigungseinrichtung angeordnet;

b) es ist ein drittes elastisches Ringelement·(13) zwecks Abdichtung der Hydraulikräume am Innen- oder Aussendurchmesser der Betätigungseinrichtung vorgesehen.

3. Betätigungseinrichtung nach Anspruch 1 oder 2, dadurch gekennzeichnet, dass das erste elastische Ringelement (12, 22) derart verformbar und gelagert ist, dass es neben der die Hydraulikräume abdichtenden und die Reibverbindung zwischen dem einen Spreizelement (10, 21) und dem Verbindungsglied (15, 19) herstellenden Funktion eine Rückstellfunktion bezüglich des einen Spreizelementes (10, 21) ausübt.

4. Betätigungseinrichtung nach einem der vorhergehenden Ansprüche, dadurch gekennzeichnet, dass die Feder (17) als sich einerseits an dem Anschlag (16) und andererseits am Verbindungsglied (15) abstützende Schraubenfeder ausgebildet ist.

5. Betätigungseinrichtung nach einem der Ansprüche 1 bis 3, gekennzeichnet durch folgende Merkmale:

a) das zweite elastische Ringelement (18, 24) ist als Federblock (18, 24) ausgebildet, der eine elastische Verformbarkeit in Spreizrichtung der Spreizelemente (20, 21) aufweist und zugleich die Funktion der Feder (18b, 24) ausübt;

b) der Federblock (18, 24) ist mit dem Verbindungselement (19) einerseits und dem anderen Spreizelement (20) andererseits fest verbunden.

6. Betätigungseinrichtung nach Anspruch 5, dadurch gekennzeichnet, dass der Federblock (18) von einem Elastomer (18a) und einer darin eingebetteten Stahlfeder (18b) gebildet ist.

7. Betätigungseinrichtung nach Anspruch 5, dadurch gekennzeichnet, dass der Federblock (24) von einem aus einem reinen Elastomermaterial bestehenden Block gebildet ist.

8. Betätigungseinrichtung nach Anspruch 2, dadurch gekennzeichnet, dass das dritte elastische Ringelement(13) derart verformbar und gelagert ist, dass es neben der Abdichtung der Hydraulikräume über eine Reibverbindung zu einem der Spreizelemente (10, 21; 9, 20) oder den Spreizelementen (10, 21; 9, 20) eine Rückstellfunktion der Spreizelemente (10, 21; 9, 20) ausübt.

9. Betätigungseinrichtung nach einem der Ansprüche 2 bis 8, dadurch gekennzeichnet, dass sowohl am Aussendurchmesser als auch am Innendurchmesser der Betätigungseinrichtung je eine Nachstelleinrichtung und eine Feder angeordnet sind.

## Claims

1. Actuating device for a disc brake, especially for motor vehicles, which comprises the following features:

(a) the actuating device has two hydraulically actuable expansion elements (10, 21; 9, 20) which can be moved relative to one another while pressing at least one brake lining against a brake disc;

(b) an adjusting device is provided which effects adjustment of additional travel of the expansion elements (10, 21; 9, 20) caused by wear of the brake lining;

(c) the adjusting device contains an annular connecting element (15, 19) which is located in the area of movement of the expansion elements (10, 21; 9, 20) and can be moved in the direction of movement of the expansion elements (10, 21; 9, 20),

(d) the connecting element (15, 19) is sealed against one of the expansion elements (10, 21) by way of a first resilient ring element (12, 22);

(e) the connecting element (15, 19) is sealed against the other expansion element (9, 20) by way of a second resilient ring element (14, 18, 24);

(f) the other expansion element (9, 20) has a stop (16, 23) which projects into the path of movement of the connecting element (15, 19);

(g) connected between the connecting element (15, 19) and the other expansion element (9, 20) is a spring (17, 18b, 24) which biases the connecting element in the direction away from the stop (16, 23) in such a manner that the force of the spring (17, 18b, 24) opposes the relative movement of the expansion elements (10, 21; 9, 20) in the direction of expansion and effects a return movement of the expansion elements (10, 21; 9, 20) after an expansion movement, characterised by the following features:

(h) the first resilient ring element (12, 22) is so designed and so arranged that it connects the connecting element (15, 19) and one of the expansion elements (10, 21), in such a manner that they are frictionally engaged, with a force that is at least as large as the force of the spring (17, 18b, 24);

(i) the stop (16, 23) on the other expansion element (9, 20) is arranged in such a manner that, during the additional expansion travel, the connecting element (15, 19) is movable by means of the stop (16, 23) against the frictional force of the first resilient ring element (12, 22).

2. Actuating device according to Claim 1, in which the disc brake is designed as a fully lined disc brake having an annular actuating device, characterised by the following features:

(a) the adjusting device and the spring (17, 18b, 24) are arranged at least on the outer or inner periphery of the actuating device;

(b) a third resilient ring element (13) is provided on the inner or outer diameter of the actuating device for the purpose of sealing the hydraulic spaces.

3. Actuating device according to Claim 1 or 2, characterised in that the first resilient ring element (12, 22) can be so deformed and is so mounted that, in addition to its function of sealing the hydraulic spaces and producing the frictional connection between one of the expansion elements (10, 21) and the connecting member (15, 19), it has the function of returning one of the expansion elements (10, 21).

4. Actuating device according to any one of the preceding claims, characterised in that the spring (17) is designed as a helical spring which is supported on one side on the stop (16) and on the other on the connecting member (15).

5. Actuating device according to any one of Claims 1 to 3, characterised by the following features:

(a) the second resilient ring element (18, 24) is designed as a spring block (18, 24) which is resiliently deformable in the direction of expansion of the expansion elements (20, 21) and at the same time acts as the spring (18, 24);

(b) the spring block (18, 24) is rigidly connected on one side to the connecting element (19) and on the other to the other expansion element (20).

6. Actuating device according to Claim 5, characterised in that the spring block (18) is formed from an elastomer (18a) with a steel spring (18) embedded therein.

7. Actuating device according to Claim 5, characterised in that the spring block (24) is formed from a block consisting solely of elastomeric material.

8. Actuating device according to Claim 2, characterised in that the third resilient ring element (13) can be so deformed and is so mounted that, in addition to sealing the hydraulic spaces by way of a frictional connection to one of the expansion elements (10, 21; 9, 20) or to both the expansion elements (10, 21; 9, 20), it has the function of returning the expansion elements (10, 21; 9, 20).

9. Actuating device according to any one of Claims 2 to 8, characterised in that an adjusting device and a spring are located both on the outer diameter and on the inner diameter of the actuating device.

**Revendications**

1. Dispositif d'actionnement pour un frein à disque, notamment pour véhicules automobiles, comportant les caractéristiques suivantes:

a) le dispositif d'actionnement présente deux éléments écarteurs (10, 21; 9, 20) sollicitables hydrauliquement, mobiles l'un vers l'autre, lors du serrage d'au moins une garniture de frein contre un disque de frein;

b) il est prévu un dispositif de rattrapage qui provoque un rattrapage d'une course d'expansion supplémentaire des éléments écarteurs (10, 21; 9, 20) due à l'usure des garnitures de frein;

c) le dispositif de rattrapage comporte un élément de liaison (15, 19) de forme annulaire, mobile dans la direction du mouvement des éléments écarteurs (10, 21; 9, 20), agencé dans le domaine du mouvement d'expansion des éléments écarteurs (10, 21; 9, 10);

d) l'élément de liaison (15, 19) est conjugué avec étanchéité au premier élément écarteur (10, 21) par un premier élément annulaire élastique (12, 22);

e) l'élément de liaison (15, 19) est conjugué avec étanchéité à l'autre élément écarteur (9, 20) par un deuxième élément annulaire élastique (14, 18, 24);

f) l'autre élément écarteur (9, 20) présente une butée (16, 23) faisant saillie sur la trajectoire de l'élément de liaison (15, 19);

g) entre l'élément de liaison (15, 19) et l'autre élément écarteur (9, 20) est disposé un ressort (17, 18b, 24) qui précontraint l'élément de liaison dans une direction s'éloignant de la butée (16, 23), de telle façon que la force du ressort (17, 18b, 24) soit opposée au mouvement relatif des éléments écarteurs (10, 21; 9, 20) dans la direction d'expansion et provoque un mouvement de rappel des éléments écarteurs (10, 21; 9, 10) après un mouvement d'expansion, caractérisé par les caractéristiques suivantes:

h) le premier élément annulaire élastique (12, 22) est réalisé et agencé de façon à relier, par une liaison de frottement, l'élément de liaison (15, 19) et le premier élément écarteur (10, 21), cela avec une force au moins égale à la force du ressort (17, 18b, 23);

i) la butée (16, 23) sur l'autre élément écarteur (9, 20) est agencée de telle façon que l'élément de liaison (15, 19) puisse, pendant la course d'expansion supplémentaire, être déplacé au moyen de la butée (16, 23) contre la force de frottement du premier élément annulaire élastique (12, 22).

2. Dispositif d'actionnement selon la revendication 1, dans lequel le frein à disque est réalisé sous la forme d'un frein à disque et garnitures complètes, avec un dispositif d'actionnement annulaire, caractérisé par les caractéristiques suivantes:

a) le dispositif de rattrapage et le ressort (17, 18b, 24) sont agencés au moins sur le pourtour extérieur ou intérieur du dispositif d'actionnement;

b) un troisième élément annulaire élastique (13) est prévu aux fins d'étanchéification des chambres hydrauliques sur le diamètre intérieur ou extérieur du dispositif d'actionnement.

3. Dispositif d'actionnement selon la revendication 1 ou 2, caractérisé en ce que le premier élément annulaire élastique (12, 22) est déformable et monté de façon à exercer, pour ce qui est du premier élément écarteur (10, 21), une fonction de rappel en plus de la fonction d'étanchéification des chambres hydrauliques et d'établissement de la liaison de frottement entre le premier élément écarteur (10, 21) et l'élément d'assemblage (15, 19).

4. Dispositif d'actionnemet selon l'une des revendications précédentes, caractérisé en ce que le ressort (17) est aménagé en tant que ressort hélicoïdal prenant appui d'un côté contre la butée (16) et de l'autre côté conte l'élément de liaison (15).

5. Dispositif d'actionnement selon l'une des revendications 1 à 3, caractérisé par les caractéristiques suivantes:

a) le deuxième élément annulaire élastique (18, 24) est réalisé sous la forme d'un bloc-ressort (18, 24) présentant une déformabilité élastique dans la direction d'expansion des éléments écarteurs (20, 21) et exerçant en même temps la fonction du ressort (18b, 24);

b) le bloc-ressort (18, 24) est solidarisé d'une part à l'élément de liaison (19) et d'autre part à l'autre élément écarteur (20).

6. Dispositif d'actionnement selon la revendication 5, caractérisé en ce que le bloc-ressort (18) est constitué par un élastomère (18a) et par un ressort en acier (18b) qui est pris dans cet élastomère.

7. Dispositif d'actionnement selon la revendication 5, caractérisé en ce que le bloc-ressort (24) est formé par un bloc fait uniquement de matière élastomère.

8. Dispositif d'actionnement selon la revendication 2, caractérisé en ce que le troisième élément annulaire élastique (13) est déformable et monté de façon à exercer, en plus de l'étanchéification des chambres hydrauliques, une fonction de rappel des éléments écarteurs (10, 21; 9, 20), cela par une liaison de frottement avec l'un des éléments écarteurs (10, 21; 9, 20) ou avec les éléments écarteurs (10, 21; 9, 20).

9. Dispositif d'actionnement selon l'une des revendications 2 à 8, caractérisé en ce qu'un dispositif de rattrapage et un ressort sont disposés aussi bien sur le diamètre extérieur que sur le diamètre intérieur du dispositif d'actionnement.

Fig. 1

1 5 3 7 16 15 17 14 10 9 4 6 2

12

13

11

8

0 086 887

Fig. 2

Fig. 3

Fig. 4